Europäisches Patentamt

European Patent Office

Office européen des brevets

⑩

(11) Publication number: **0 246 008**
**B1**

(12) **EUROPEAN PATENT SPECIFICATION**

(45) Date of publication of patent specification: **04.04.90**

(21) Application number: **87303877.2**

(22) Date of filing: **30.04.87**

(51) Int. Cl.⁵: **B 60 R 13/06**

(54) Weatherstrip.

(30) Priority: **01.05.86 GB 8610726**

(43) Date of publication of application:
**19.11.87 Bulletin 87/47**

(45) Publication of the grant of the patent:
**04.04.90 Bulletin 90/14**

(84) Designated Contracting States:
**AT BE CH DE ES FR GR IT LI LU NL SE**

(56) References cited:
**DE-A-3 528 201**
**FR-A-1 040 950**
**FR-A-2 098 871**
**FR-E- 88 385**
**GB-A-2 127 884**
**GB-A-2 140 065**

(73) Proprietor: **SILENT CHANNEL PRODUCTS LIMITED**
**Ferrars Road**
**Huntingdon Cambridgeshire PE18 7HN (GB)**

(72) Inventor: **Pike, Harold William Edward**
**"Elm Lee" School Lane Conington**
**Nr. Elsworth Cambridgeshire (GB)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

## Description

This invention relates to an elongate strip including a channel-shaped portion for receiving a sheet of glazing material and is more particularly, although not exclusively, concerned with an elongate strip for a motor vehicle, the strip including a flange finisher portion and a channel for receiving a sheet of glazing material.

GB—A—1006620 and GB—A—1317087 each disclose a guide strip for use with motor vehicle windows. Embedded in the U-shaped guide channel of the strip is a U-shaped reinforcing band, the free ends of which are curved over to enclose a resilient wire.

GB—A—2127884A discloses a sealing strip having a flange finisher portion and a sealing portion, the flange finisher portion being provided with a bore which receives a wire insert enabling the sealing strip to be pre-formed in a desired shape, particularly for use of the sealing strip in conjunction with a robot assembly machine.

GB—A—2140065A and DE—A—3528201A each disclose a sealing strip for a retractable window, the strip being approximately S-shaped in cross-section and having a first, flange finisher portion and a second, glass-run channel. The strip is provided with a metal core which confers rigidity on the strip. In use, an edge of a window is retained by an outer limb of the glass-run channel. The metal core extends over the flange finisher and the glass-run channel.

FR—A—1040950 relates to a U-shaped glass-run channel in each of the branches of which, and close to their ends, is buried a metal strip of approximately rectangular section the larger dimension of which is parallel with the base of the U.

According to one aspect of the present invention, there is provided an elongate strip for a motor vehicle, said strip comprising a flange finisher portion intended to clamp over a flange of the vehicle and secured to or integral with the flange finisher a glass-run channel having a wall remote from the flange finisher portion, which is intended to overlap an edge region of the external side of a glass-pane of the vehicle, the wall being unstrengthened, other than at its free end region which is made resistant to deformation by the presence of a longitudinal resilient insert in the form of a wire having a circular cross-section.

According to another aspect of the present invention, there is provided an elongate strip for a motor vehicle, said strip including a glass-run channel intended to overlap an edge region of the external surface of a glass-pane of the vehicle, the wall being unstrengthened, other than at its free end region thereof which is made resistant to deformation by the presence of a longitudinal resilient insert in the form of a wire having a circular cross-section.

Although intended for use on vehicle bodies, particularly in the provision of a glass-run channel around a door window opening, it is to be appreciated that the strip of the present invention is not to be limited to strips for door window openings, nor to strips for use on motor vehicle bodies. Thus, for instance, the elongate strip of the present invention may be employed in the sealing of a motor vehicle sun roof and may have applications in domestic glazing.

The resilient insert employed in the strip of the present invention may be made of a metal such as steel, conveniently hard drawn steel, although other metals, for example aluminium, may be used. Alternatively a material such as a plastics material may be employed.

In a short unbent portion of the elongate strip of the present invention, the wall containing the resilient insert may be bendable about its base or intermediate region. However, if the elongate strip has a bend, the wall becomes much more difficult to bend about a point on its base or intermediate region; the same applies, but to a greater extent, in the free end region of the wall. This phenomenon arises out of the fact that the resilient insert, when in an elongate strip having a bend, effectively needs to be stretched or shortened in order to be brought out of its normal position. When the strip is in place on the flange along three edges of a car door window opening, it is virtually impossible to lift the wall in which the insert is disposed. The strengthened wall very effectively acts to retain a glass-pane in the opening. The insert, positioned as it is, provides a strip which is as effective as the strip disclosed in GB—2140065 which requires a U-shaped metal carrier in its glass-run portion.

The resilient insert should be positioned reasonably close to the free end of the wall of the glass-run channel, preferably as close as is practical. The insert may be approximately 1.5 mm in diameter although any reasonable diameter adapted to the thickness of the wall in which it is disposed will be suitable.

The insert is most conveniently co-extruded with the glass-retaining section; alternatively, the insert may be positioned in the section after extrusion. The insert may be provided with an adhesive layer to assist in securing the insert within the free end region of the wall. However, the adhesive is not considered to be essential.

Although the flange finisher portion used in the strip of the present invention may be of a conventional construction, certain difficulties may be encountered in the securing together of the flange finisher and the glass-retaining channel especially if the flange finisher is formed of a plastics material whereas the glass-run channel is formed of a rubber material such as epdm. Accordingly, to enable the two parts to be joined together, the glass-run channel is co-extruded with a layer of sponge material and the sponge material is joined, by virtue of an adhesive, to the flange finisher.

The arrangement of the present invention enables the provision of a semi-flush automotive glass-run channel section. The elements of the sealing strip can be co-extruded and the arrangement is simple, quick and economic to produce. There is no need to have a major metal core in the glass-run channel portion, instead the longitudinal resilient insert suffices.

The resilient insert provides a vandal-resistant product. Moreover, the weatherstrip is also effective to retain a glass pane when pressure is exerted from inside the vehicle. This is of particular importance since, when the vehicle is travelling at speed, the external pressure on the window is reduced, tending to suck the window out of its glass-run channel. An extra force from inside the vehicle, for example a child pushing the window, could cause the glass-pane to "pop" out. However, the elongate strip of the present invention resists removal of the glass by a force acting to push the window from the inside or pull the window from the outside as well as resisting attempts to prise the window out.

For a better understanding of the present invention, and to show how it may be carried into effect, reference will now be made, by way of example, to the accompanying drawings in which:

Figure 1 shows a schematic side view of a door of a motor vehicle including a sealing strip in accordance with the present invention; and

Figure 2 shows a cross-section in the direction A—A of Figure 1.

The door 1 of a motor vehicle includes an opening 2 in which a glass-pane is movable. The glass-pane is guided by a glass-run channel forming part of the sealing strip which is fitted to a flange around the opening 2 in the door 1.

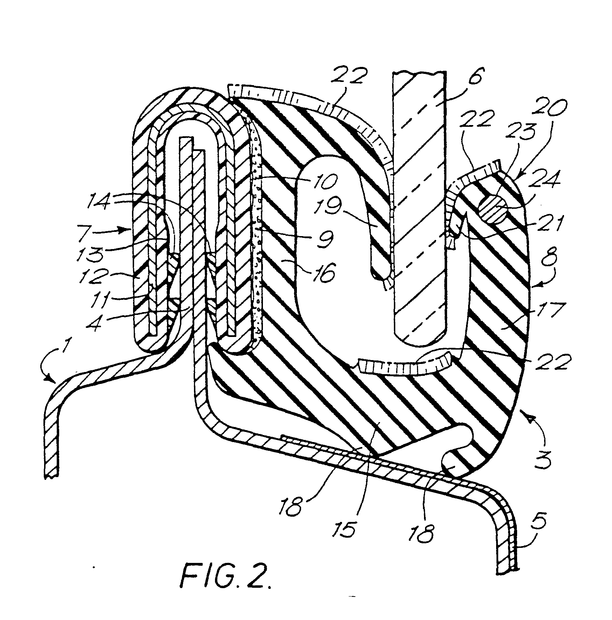

In Figure 2, the sealing strip 3 can be seen in position on the flange 4 of the door 1. The flange 4 is set back from the outer skin 5 of the door 1 such that, when the sealing strip 3 is in position, no part of the sealing strip protrudes significantly beyond the plane of the door skin 5.

The arrangement shown is of the semi-flush glass variety: this means that a retractable glass-pane 6 in the door opening is not in the exact plane of the door skin 5, rather being slightly recessed into the door 1. The outermost edge of the sealing strip 3 is substantially flush with the door skin 5.

The sealing strip 3 comprises two portions, namely a flange finisher portion 7 and a glass-run channel portion 8. The flange finisher portion 7 and the glass-run channel 8 are secured together by the provision of a layer of sponge 9 which is co-extruded with the glass-run channel portion 8 and which is bonded to the flange finisher portion 7 by an adhesive 10 preferably a heat-activated adhesive.

The flange finisher 7 comprises a metal carrier 11 which is coated with a plastics material coating 12. The flange finisher 7 is generally U-shaped and is adapted to fit over the flange 4 of the door 1. The inner surface 13 of the flange finisher 7 is provided with flexible lips 14 which secure the flange finisher portion 7 to the flange 4.

The glass-run channel 8 is also U-shaped whilst being inverted relative to the flange finisher 7.

The glass-run channel 8 includes a base portion 15, an inner side wall 16 and an outer side wall 17. The base portion 15 is provided with additional lips 18 which make sealing contact with the sloping surface of the door between the door skin 5 and the flange finisher 4.

The inner side wall 16 of the glass-run channel portion 8 is provided with an auxiliary lip 19 adapted to abut the internal face of the glass-pane 6. The outer side wall 17 includes, at its free end region 20, a small lip 21 which abuts the outer side of the glass-pane 6. The auxiliary lip 19 and the small lip 21 of the outer wall 17 are provided with flocking 22, as is the base 15 of the glass-run channel 8. In a bore 23 in the free end region 20 of the outer wall 17 of the glass-run channel 8 there is disposed a resilient insert 24, preferably made of metal wire. The metal wire insert is preferably disposed centrally of the free end region 20 of the outer wall 17, as near as is practicable to the free end.

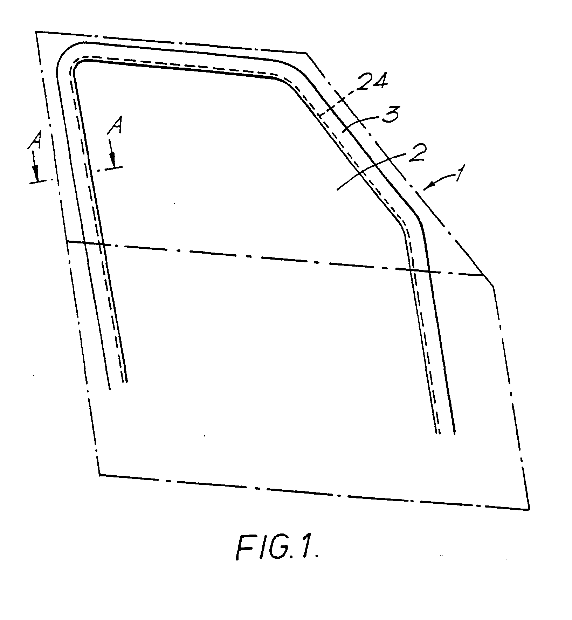

The wire insert 24 extends longitudinally of the outer wall 17, preferably along the whole length of the outer wall 17 of the sealing strip which is to be disposed on the flange of a door 1. However, it is to be appreciated that the wire insert may be positioned in the sealing strip at critical positions, namely at regions at which there are to be turning points of the sealing strip. The wire insert 24 is shown in Figure 1 to extend along the whole length of the sealing strip which is fixed to a flange on the door opening.

## Claims

1. An elongate strip (3) for a motor vehicle, said strip comprising a flange finisher portion (7) intended to clamp over a flange (4) of the vehicle and, secured to or integral with the flange finisher (7), a glass-run channel (8) having a wall (17), remote from the flange finisher portion (7), which is intended to overlap an edge region of the external surface of a glass-pane (6) of the vehicle, the wall (17) being unstrengthened, other than at its free end region (20) which is made resistant to deformation by the presence of a longitudinal resilient insert (24) in the form of a wire having a circular cross-section.

2. An elongate strip according to Claim 1, wherein the resilient insert (24) is made of a metal.

3. An elongate strip according to Claim 2, wherein the insert (24) has a diameter of approximately 1.5 mm.

4. An elongate strip according to any preceding claim, wherein the resilient insert (24) is positioned reasonably close to the free end (20) of the wall (17).

5. An elongate strip according to any preceding claim, wherein the resilient insert (24) is positioned as close as is practical to the free end (20) of the wall (17).

6. An elongate strip (3) for a motor vehicle, said strip (3) including a glass-run channel (8) having a wall (17) intended to overlap an edge region of the external side of a glass-pane (6) of the vehicle, the wall (17) being unstrengthened, other than at its free end region (20) which is made resistant to deformation by the presence of a longitudinal resilient insert (24) in the form of a wire having a circular cross-section.

7. An extrusion process for producing an elongate strip according to any preceeding claim, wherein the insert (24) is co-extruded with the glass-run section (8).

8. A process for producing an elongate strip in accordance with any one of Claims 1 to 5, wherein the flange finisher portion (7) and glass-run channel (8) are extruded and, after extrusion, the insert (24) is positioned in the section.

9. A process according to Claim 7 or 8, wherein the insert (24) is provided with an adhesive layer to assist in securing the insert (24) within the free end region (20) of the wall (17).

**Patentansprüche**

1. Länglicher Streifen (3) für ein Motorfahrzeug, mit einem Flanschabschlußstück (7) zum Klemmen über einen Flansch (4) des Fahrzeugs und einem an dem Flanschabschlußstück (7) befestigten oder diesem einstückig angeformten Glas-Laufkanal (8), der, dem Flanschabschlußstück (7) abgwandt, eine Wand (17) aufweist, welche zur Überlappung eines Kantenbereichs der Außenfläche einer Glasscheibe (6) des Fahrzeugs dient, wobei die Wand (17) unverstärkt ist, im Unterschied zu ihrem freien Endbereich (20), der durch Vorhandensein eines länglichen federnden Einsatzes (24) in Form eines Drahtes mit kreisförmigem Querschnitt formbeständig gemacht ist.

2. Länglicher Streifen nach Anspruch 1, bei dem der längliche Einsätz (24) aus einem Metall besteht.

3. Länglicher Streifen nach Anspruch 2, bei dem der Einsatz (24) einen Durchmesser von ungefähr 1,5 mm hat.

4. Länglicher Streifen nach einem der vorhergehenden Ansprüche, bei dem der federnde Einsatz (24) an nahe, wie vernünftigerweise möglich, an dem freien Ende (20) der Wand (17) angeordnet ist.

5. Länglicher Streifen nach einem der vorhergehenden Ansprüche, bei dem der federnde Einsatz (24) so nahe wie praktisch möglich an dem freien Ende (20) der Wand (17) angeordnet ist.

6. Länglicher Streifen (3) für ein Motorfahrzeug, mit einem Glas-Laufkanal (8), der eine Wand (17) aufweist, welche zur Überlappung eines Kautenbereichs der Außenfläche einer Glasscheibe (6) des Fahrzeugs dient, wobei die Wand (17), anders als an ihrem freien Endbereich (20), der durch Anwesenheit eines länglichen federnden Einsatzes (24) in Form eines Drahtes mit kreisförmigem Querschnitt formbeständig gemacht ist, unverstärkt ist.

7. Extrusionsverfahren zur Herstellung eines länglichen Streifens nach einem der vorhergehenden Ansprüche, bei dem der Einsatz (24) zusammen mit dem Glas-Laufabschnitt (8) koextrudiert wird.

8. Verfahren zur Herstellung eines länglichen Streifens nach einem der Ansprüche 1 bis 5, bei dem das Flanschabschlußstück (7) und der Glas-Laufkanal (8) extrudiert werden und der Einsatz (24) nach der Extrusion in dem Abschnitt angeordnet wird.

9. Verfahren nach Anspruch 7 oder 8, bei dem der Einsatz (24) mit einer Klebeschicht versehen ist, um die Sicherung des Einsatzes (24) in dem freien Endbereich (20) der Wand (17) zu unterstützen.

**Revendications**

1. Bourrelet allongé (3) pour véhicule à moteur, ledit bourrelet comportant une partie formant parement (7) de rebord destinée à enserrer un rebord (4) du véhicule et, fixée au parement (7) de rebord ou faisant corps avec le parement, une voie (8) de passage de vitre avant une paroi (17), distante de la partie formant parement (7) de rebord, qui est conçue pour chevaucher une région formant bord de la surface extérieure d'une vitre (6) du véhicule, la paroi (17) n'étant pas renforcés, sauf dans sa partie terminale libre (20) qui est rendue résistante aux déformations par la présence d'un élément longitudinal élastique rapporté (24) sous la forme d'un fil à section transversale circulaire.

2. Bourrelet allongé selon la revendication 1, dans lequel l'élément élastique rapporté (24) est un métal.

3. Bourrelet allongé selon la revendication 2, dans lequel l'élément rapporté (24) a un diamètre d'environ 1,5 mm.

4. Bourrelet allongé selon l'une quelconque des revendications précédentes, dans lequel l'élément élastique rapporté (24) est disposé à distance raisonnable de l'extrémité libre (20) de la paroi (17).

5. Bourrelet allongé selon l'une quelconque des revendications précédentes, dans lequel l'élément élastique rapporté (24) est disposé le plus près possible de l'extrémité libre (20) de la paroi (17).

6. Bourrelet allongé (3) pour véhicule à moteur, ledit bourrelet (3) comportant une voie (8) de passage de vitre ayant une paroi (17) conçue pour chevaucher une partie formant bord de la face extérieure d'une vitre (6) du véhicule, la paroi (17) n'étant pas renforcée, sauf dans sa partie terminale libre (20) qui est rendue résistante aux déformations par la présence d'un élément élastique longitudinal rapporté (24) sous la forme d'un fil à section transversale circulaire.

7. Procédé d'extrusion pour fabriquer un bourrelet allongé selon l'une quelconque des revendications précédentes, dans lequel l'élément rapporté (24) est coextrudé avec la voie (8) de passage de vitre.

8. Procédé pour fabriquer un bourrelet allongé selon l'une quelconque des revendications 1 à 5, dans lequel la partie formant parement (7) de rebord et la voie (8) de passage de vitre sont extrudées et, après l'extrusion, l'élément rapporté (24) est mis en place dans la voie.

7 EP 0 246 008 B1 8

9. Procédé selon la revendication 7 ou 8, dans lequel l'élément rapporté (24) est pourvu d'une couche de colle pour faciliter la fixation de l'élément rapporté (24) dans la partie terminale libre (20) de la paroi (17).

FIG.1.

FIG. 2.